# EUROPÄISCHE PATENTANMELDUNG

(11) **EP 4 596 892 A1**
(43) Veröffentlichungstag der Anmeldung: **06.08.2025**
(21) Anmeldenummer: 25154962.2
(22) Anmeldetag: 30.01.2025
(51) Int. Cl.: F04D 29/057, F04D 29/056, F16C 17/02, F16C 33/10

(54) **AERODYNAMISCHES LAGER SOWIE EINE LAGERANORDNUNG UMFASSEND ZWEI ALS RADIALLAGER AUSGEBILDETE AERODYNAMISCHE LAGER**

(30) Priorität: 31.01.2024 DE 102024102698
(71) Anmelder: ebm-papst Mulfingen GmbH & Co. KG, 74673 Mulfingen (DE)
(72) Erfinder: Dobrica, Mihai B., 69124 Heidelberg (DE)
(74) Vertreter: Staeger & Sperling Partnerschaftsgesellschaft mbB

(57) **Zusammenfassung**

Die Erfindung betrifft ein aerodynamisches Lager (1) zur axialen und/oder radialen Lagerung einer sich entlang einer Rotationsachse (A) erstreckenden Welle (2) für einen Turbokompressor, wobei das aerodynamische Lager (1) einen als Rotor bezeichenbaren ersten Lagerteil (10) und einen als Stator bezeichenbaren zweiten Lagerteil (20) aufweist, gegenüber welchem der erste Lagerteil (10) um die Rotationsachse (A) rotierbar ist, wobei das erste Lagerteil (10) und/oder das zweite Lagerteil (20) eine dem jeweils anderen Lagerteil (10, 20) zugewandte Lagerfläche (11, 21) aufweist, an welcher zwischen den Lagerteilen (10, 20) ein Gaspolster (3) zur aerodynamischen Lagerung erzeugbar ist, wobei die Lagerfläche (11, 21) eine Vielzahl von Vertiefungen (12) aufweist, welche jeweils einem vorbestimmten Längsverlauf (13) an der Lagerfläche (11, 21) folgen und zu einem vorbestimmten Muster angeordnet sind, wobei der Längsverlauf (13) zwei Abschnitte (13A, 13B) aufweist, welche an einem Scheitelpunkt (14) ineinander übergehen, wobei der Scheitelpunkt (14) auf einer Scheitellinie (S) liegt, welche gegenüber einer Mittellinie (M) der Lagerfläche (11, 21) parallelverschoben ist, sodass der Längsverlauf (13) asymmetrisch zu der Mittellinie (M) ist.

## Beschreibung

Die Erfindung betrifft ein aerodynamisches Lager zur axialen und/oder radialen Lagerung einer sich entlang einer Rotationsachse erstreckenden Welle für einen Turbokompressor, insbesondere einem Hochgeschwindigkeits- Turbokompressor, sowie eine Lageranordnung mit zwei als Radiallagern ausgebildeten aerodynamischen Lagern.

Aerodynamische Lager, welche auch als Gas- bzw. Luftlager bezeichnet werden können, sind im Stand der Technik seit langem bekannt. Dabei wird zwischen zwei Lagerungspartnern bzw. von diesen bereitgestellten Lagerflächen ein Gas- bzw. Luftpolster als Schmiermittel aufgebaut, sodass die Lagerungspartner bzw. Lagerteile im Wesentlichen berührungs- und reibungsfrei relativ zueinander rotieren können.

Zur Erhöhung der Stabilität bzw. der mit dem Lager maximal möglichen Drehzahlen ist zudem seit langem bekannt in die Lagerflächen Vertiefungen einzubringen, durch welche das Gas- bzw. Luftpolster insbesondere bei hohen Drehzahlen gleichmäßig und belastbar bleibt, sodass auch bei hohen Drehzahlen oder einer hohen Belastung des Lagers an den Lagerflächen eine für die Lagerung erforderliche Druckverteilung erhalten bleibt.

Die Vertiefungen können bei Axiallagern beispielsweise spiralartig und bei Radiallagern beispielsweise pfeilartig ausgebildet sowie jeweils zu einem Fischgrätenmuster angeordnet sein, sodass zueinander benachbarte Vertiefungen berührungslos ineinander eingreifen.

Dabei ist im Stand der Technik vorgesehen, dass die Vertiefungen insbesondere im Fall von einer Anordnung im Fischgrätenmuster - symmetrisch zu einer die jeweilige Lagerfläche des Lagerteils teilenden Mittellinie angeordnet sind, sodass also die Scheitelpunkte pfeilförmig verlaufender Vertiefungen auf der Mittellinie liegen.

Entsprechend liegt der durch die Druckverteilung an der Lagerfläche bestimmte Hauptlagerpunkt bzw. Hauptstützbereich auf der Mittellinie.

Werden bei einer Radiallageranordnung mehrere solche als Radiallager ausgebildete aerodynamische Lager verwendet, ergibt sich aus dem Abstand der Mittellinien entlang der Rotationsachse der gelagerten Welle ein Lagerabstand, welcher jedoch für eine gewünschte Stabilität unter Umständen nicht ausreichend ist. Daher muss der Lagerabstand d.h. der Abstand zwischen den Mittellinien gemäß dem im Stand der Technik vorgesehenen Lösung dadurch erhöht werden, dass die Lagerflächen bzw. die Radiallager in Axialrichtung weiter auseinander angeordnet werden, was zu einer Bauraumerhöhung führt und konstruktiv nicht immer möglich ist.

Der Erfindung liegt deshalb die Aufgabe zugrunde, die vorgenannten Nachteile zu überwinden und ein einfach herzustellendes aerodynamisches Lager bereitzustellen, mit welchen in einfacherweise die Stabilität einer Lageranordnung erhöht werden kann.

Diese Aufgabe wird durch die Merkmalskombination gemäß Patentanspruch 1 gelöst.

Erfindungsgemäß wird daher ein aerodynamisches Lager zur axialen und/oder radialen Lagerung einer sich entlang einer Rotationsachse erstreckenden Welle für einen Turbokompressor vorgeschlagen, wobei es sich hierbei insbesondere um einen Hochgeschwindigkeits-Turbokompressor handelt und das aerodynamische Lager vorzugsweise zur radialen Lagerung d.h. als Radiallager ausgebildet ist. Unter dem Begriff Turbokompressor werden Axial-, Radial- und Diagonalkompressoren zusammengefasst, sodass es sich auch vorliegend bei dem Turbokompressor um einen Axialkompressor, einen Radialkompressor oder einen Diagonalkompressor handeln kann. Das aerodynamische Lager weist einen als Rotor bezeichenbaren ersten Lagerteil und einen als Stator bezeichenbaren zweiten Lagerteil auf, gegenüber welchem der erste Lagerteil um die Rotationsachse rotierbar ist. Das erste Lagerteil und/oder das zweite Lagerteil weisen eine dem jeweils anderen Lagerteil zugewandte und wie im Weiteren beschrieben ausgebildete Lagerfläche auf, an welcher zwischen den Lagerteilen ein Gas- bzw. Luftpolster zur aerodynamischen Lagerung erzeugbar ist. Die Lagerfläche bzw. ggfs. die Lagerflächen weisen jeweils eine Vielzahl von Vertiefungen auf, welche jeweils einem vorbestimmten Längsverlauf an bzw. entlang der Lagerfläche folgen und zu einem vorbestimmten Muster angeordnet sind. Der Längsverlauf weist dabei zwei Abschnitte auf, welche an einem Scheitelpunkt und vorzugsweise spitzwinklig ineinander übergehen. Dabei ist erfindungsgemäß vorgesehen, dass der Scheitelpunkt auf einer Scheitellinie liegt, welche gegenüber einer Mittellinie der Lagerfläche parallelverschoben ist, sodass die Scheitellinie also parallel der Mittellinie und beabstandet zu dieser verläuft. Dadurch ist der Längsverlauf asymmetrisch zu der Mittellinie.

Da durch den Scheitelpunkt bzw. die Scheitelpunkte der Vertiefungen der Hauptlagerpunkt bzw. der Hauptstützbereich der jeweiligen Lagerfläche bzw. des Lagers bestimmt wird, wird dieser also von der Mittellinie auf die Scheitellinie verschoben, sodass auch das an der Lagerfläche erzeugbare Druckpolster asymmetrisch ausgebildet ist und das Lager außerhalb der Mittellinie abstützt.

Entsprechend kann das Druckpolster derart ausgebildet werden, dass eine außerhalb der Mittellinie auf das Lager wirkende Kraft optimiert abgestützt wird, ohne dass dabei das Lager bzw. die Lagerfläche verschoben angeordnet werden muss.

Vorzugsweise verlaufen die Abschnitte bei einer Projektion auf eine ebene Fläche und/oder einer Abwicklung einer Mantelfläche der Welle jeweils geradlinig, wobei der Längsverlauf vorzugsweise pfeilförmig ausgebildet ist.

Weiter weisen die Abschnitte jeweils einen vorbestimmten Winkel zu der Scheitellinie auf, wobei ein erster Winkel eines ersten Abschnitts gleich einem zweiten Winkel eines zweiten Abschnitts ist oder der Winkel des ersten Abschnitts ungleich dem Winkel des zweiten Abschnitts ist.

Die Vertiefungen können dabei aufgrund ihres vorbestimmten Längsverlaufs auch beispielsweise als Kanäle oder Rinnen oder Radialnuten bezeichnet werden, welche sich bevorzugt in Radialrichtung in die Welle erstrecken.

Die Vertiefungen können zudem in einem Fischgrätenmuster angeordnet sein, sodass sich diese in Umfangsrichtung überlappen. Insbesondere kann eine von einer Vertiefung gebildete Spitze in einen von einer unmittelbar benachbarten Vertiefung aufgespannten Bereich eingreifen.

Dabei muss die jeweilige Breite der Vertiefungen, welche vorzugsweise orthogonal zu dem jeweiligen Längsverlauf oder parallel zu der Mittel- bzw. Scheitellinie gemessen wird, nicht zwingend konstant sein. Vielmehr können die Vertiefungen über ihren jeweiligen Längsverlauf an der Lagerfläche in jedem der Abschnitte jeweils eine gleichbleibende oder variierende Breite aufweisen, was wiederum positive Auswirkungen bei der Optimierung des Druckpolsters insbesondere für hohe Drehzahlen haben kann.

Auch wenn die Breiten je Abschnitt konstant bzw. gleichbleibend sein sollten, kann die Breite in dem ersten Abschnitt und die Breite in dem zweiten Abschnitt unterschiedlich sein.

Vorzugsweise, ist das aerodynamische Lager als Radiallager zur radialen Lagerung einer sich entlang einer Rotationsachse erstreckenden Welle für einen Turbokompressor ausgebildet, wobei der erste Lagerteil insbesondere integral mit der Welle ausgebildet ist.

Ein weiterer Aspekt der Erfindung betrifft eine Lageranordnung aufweisend zwei als Radiallager ausgebildete erfindungsgemäße aerodynamischen Lager. Der erste Lagerteil des ersten Radiallagers und der erste Lagerteil des zweiten Radiallagers sind an der Welle bzw. entlang der Rotationsachse beabstandet zueinander, sodass zwischen den Mittellinien der beiden Lagerflächen entlang der Rotationsachse eine als realer Lagerabstand bezeichenbare Distanz liegt. Die Scheitellinien der jeweiligen Lager sind dabei jeweils an der von dem jeweils anderen Lagerteil abgewandten Seite der jeweiligen Mittellinie angeordnet, sodass zwischen den Scheitellinien der beiden Lagerflächen entlang der Rotationsachse eine als virtueller Lagerabstand bezeichenbare Distanz liegt, welche größer ist als der reale Lagerabstand.

Dadurch kann also der Abstand bzw. die Distanz zwischen den durch die Scheitellinien bestimmten Hauptstützbereichen der beiden Lager ohne eine Verschiebung der Lager vergrößert und die Abstützung durch die beiden Radiallager verbessert werden.

Vorzugsweise sind die beiden Radiallager oder zumindest die Lagerflächen der zwei ersten Lagerteile bezüglich einer mittig zwischen den Radiallagern liegenden und zu der Rotationsachse orthogonalen Symmetrieebene spiegel- bzw. punktsymmetrisch.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

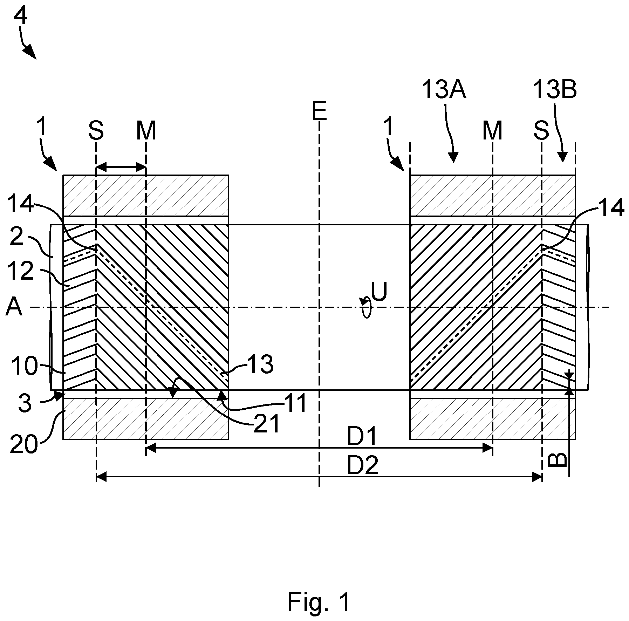

- Fig. 1: eine Lageranordnung umfassend zwei aerodynamische Lager.

Die Figur ist beispielhaft schematisch und bildet zwei aerodynamische Lager 1 ab, welche eine Lageranordnung 4 einer Welle 2 bilden. Die beiden aerodynamischen Lager 1 sind zur radialen Lagerung der sich entlang der Rotationsachse A erstreckenden Welle 2 ausgebildet und somit jeweils als Radiallager 1 bezeichenbar, wobei die dargestellte Lageranordnung 4 insbesondere für den Einsatz in einem Hochgeschwindigkeits-Turbokompressor vorgesehen ist.

Entsprechend weist jedes der Radiallager 1 zwei Lagerungspartner bzw. zwei Lagerteile 10, 20 auf. Der erste Lagerteil 10 ist jeweils als Rotor integral mit der Welle 2 ausgebildet und entsprechend um die Rotationsachse A rotierbar. Der zweite Lagerteil 20 ist jeweils als Stator ausgebildet und umgibt den jeweiligen ersten Lagerteil 10 in Umfangsrichtung U vollständig sowie ringförmig, sodass die in Figur 1 geschnitten dargestellten zweiten Lagerteile 20 im Wesentlichen einem Hohlzylinder entsprechen, wobei diese auch über ein Zwischenstück oder unmittelbar miteinander verbunden oder miteinander ausgebildet sein könnten.

Die Lagerteile 10, 20 eines jeweiligen Lagers 1 weisen jeweils eine Lagerfläche 11, 21 auf, welche einander zugewandt sind, sodass sich bei einer Rotation des ersten Lagerteils 10 zwischen den Lagerflächen 11, 21 ein Luft- bzw. Gaspolster 3 ausbildet, welches als Schmier- bzw. Gleitmittel zur Lagerung dient.

Um an der Lagerfläche 11 des ersten Lagerteils 10 bzw. an der Rotor-Lagerfläche 11 des Rotors 10 auch bei hohen Drehzahlen eine optimierte Druckverteilung des Schmiermediums d.h. des Gases bzw. der Luft zu erreichen, sind auf der ersten Lagerfläche 11 eine Vielzahl von Vertiefungen 12 vorgesehen, welche sich jeweils pfeilförmig entlang eines Längsverlaufs 13 erstrecken. Entsprechend weisen die jeweils identischen Längsverläufe 13 der Vertiefungen 12 jeweils zwei geradlinige Abschnitte 13A, 13B auf, welche durch einen Knick bzw. Scheitelpunkt 14 miteinander verbunden sind.

Wie in Figur 1 gut zu erkennen, überlappen die pfeilförmigen Vertiefungen 12 in Umfangsrichtung U, sodass sich also ein Muster ähnlich einem Fischgrätenmuster ergibt.

Obgleich die Vertiefungen 12 vorliegend mit - die Rand- bzw. Knickbereiche ausgenommen - einer gleichbleibenden Breite B dargestellt sind, kann die Breite B über den Längsverlauf 13 einer jeweiligen Vertiefung 12 auch variieren.

Erfindungsgemäß ist dabei jeweils vorgesehen, dass der Knick bzw. Scheitelpunkt 14 gerade nicht auf einer die Lagerfläche 11 mittig und orthogonal zu der Rotationsachse A verlaufenden Mittellinie M liegt, sondern auf einer dazu parallel verschobenen Scheitellinie S, sodass also die Vertiefungen 12 bzw. das durch diese gebildete Muster asymmetrisch zu der Mittellinie M ist.

Dadurch liegt der durch das Druckpolster gebildete und entsprechend durch die Vertiefungen 12 beeinflusste Hauptstützbereich zur Abstützung radialer Lasten bzw. der radialen Lagerung nicht mehr auf der Mittellinie M, sondern außermittig auf der Scheitellinie S, was insbesondere bei der dargestellten Lageranordnung 4 vorteilhaft ist, da die zwei Radiallager 1 bezüglich einer Symmetrieebene E gespiegelt sind, wodurch sich ein virtueller Lagerabstand D2 ergibt, der größer ist als der reale Lagerabstand D1. Das führt zu einer höheren Stabilität und Laufruhe der durch die Lager 1 gelagerten Welle 2, was insbesondere für hohe Drehzahlen vorteilhaft ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Aerodynamisches Lager (1) zur axialen und/oder radialen Lagerung einer sich entlang einer Rotationsachse (A) erstreckenden Welle (2) für einen Turbokompressor,
wobei das aerodynamische Lager (1) einen als Rotor bezeichenbaren ersten Lagerteil (10) und einen als Stator bezeichenbaren zweiten Lagerteil (20) aufweist, gegenüber welchem der erste Lagerteil (10) um die Rotationsachse (A) rotierbar ist,
wobei das erste Lagerteil (10) und/oder das zweite Lagerteil (20) eine dem jeweils anderen Lagerteil (10, 20) zugewandte Lagerfläche (11, 21) aufweist, an welcher zwischen den Lagerteilen (10, 20) ein Gaspolster (3) zur aerodynamischen Lagerung erzeugbar ist,
wobei die Lagerfläche (11, 21) eine Vielzahl von Vertiefungen (12) aufweist, welche jeweils einem vorbestimmten Längsverlauf (13) an der Lagerfläche (11, 21) folgen und zu einem vorbestimmten Muster angeordnet sind,
wobei der Längsverlauf (13) zwei Abschnitte (13A, 13B) aufweist, welche an einem Scheitelpunkt (14) ineinander übergehen,
wobei der Scheitelpunkt (14) auf einer Scheitellinie (S) liegt, welche gegenüber einer Mittellinie (M) der Lagerfläche (11, 21) parallelverschoben ist, sodass der Längsverlauf (13) asymmetrisch zu der Mittellinie (M) ist,
wobei wobei die Abschnitte (13A, 13B) jeweils einen vorbestimmten Winkel zu der Scheitellinie (S) aufweisen
und wobei ein erster Winkel eines ersten Abschnitts (13A) gleich einem zweiten Winkel eines zweiten Abschnitts (13B) oder
wobei der Winkel des ersten Abschnitts (13A) ungleich dem Winkel des zweiten Abschnitts (13B) ist.

2. Aerodynamisches Lager nach Anspruch 1,
wobei die Abschnitte (13A, 13B) bei einer Projektion auf eine ebene Fläche und/oder einer Abwicklung einer Mantelfläche der Welle (2) jeweils geradlinig verlaufen und der Längsverlauf (13) pfeilförmig ausgebildet ist.

3. Aerodynamisches Lager nach einem der vorhergehenden Ansprüche,
wobei die Vertiefungen (12) in einem Fischgrätenmuster angeordnet sind und sich in Umfangsrichtung (U) überlappen.

4. Aerodynamisches Lager nach einem der vorhergehenden Ansprüche, wobei die Vertiefungen (12) über ihren jeweiligen Längsverlauf (13) an der Lagerfläche (11, 21) in jedem der Abschnitte jeweils eine gleichbleibende oder variierende Breite (B) aufweisen.

5. Aerodynamisches Lager nach dem vorhergehenden Anspruch,
wobei die Breite (B) in dem ersten Abschnitt (13A) und die Breite (B) in dem zweiten Abschnitt (13B) unterschiedlich ist.

6. Aerodynamisches Lager nach einem der vorhergehenden Ansprüche,
wobei das aerodynamische Lager (1) als Radiallager zur radialen Lagerung einer sich entlang einer Rotationsachse (A) erstreckenden Welle (2) für einen Turbokompressor und der erste Lagerteil (10) insbesondere integral mit der Welle (2) ausgebildet ist.

7. Lageranordnung (4) aufweisend zwei als Radiallager ausgebildete aerodynamische Lager (1) nach dem vorhergehenden Anspruch,
wobei die ersten Lagerteile (10) der zwei Radiallager (1) an der Welle (2) beabstandet zueinander sind und zwischen den Mittellinien (M) der beiden Lagerflächen (11) entlang der Rotationsachse (A) eine als realer Lagerabstand (D1) bezeichenbare Distanz liegt, und
wobei die Scheitellinien (S) jeweils an der von dem jeweils anderen ersten Lagerteil (10) abgewandten Seite der jeweiligen Mittellinie (M) angeordnet sind, sodass zwischen den Scheitellinien (S) der beiden Lagerflächen (11) entlang der Rotationsachse (A) eine als virtueller Lagerabstand (D2) bezeichenbare Distanz liegt, welche größer ist als der reale Lagerabstand (D1).

8. Lageranordnung nach dem vorhergehenden Anspruch,
wobei die Radiallager (1) oder zumindest die Lagerflächen (11) der zwei ersten Lagerteile (10) bezüglich einer mittig zwischen den Radiallagern (1) liegenden und zu der Rotationsachse (A) orthogonalen Symmetrieebene (E) spiegelsymmetrisch sind.
